# EUROPEAN PATENT SPECIFICATION

(11) **EP 4 042 904 B1**
(45) Date of publication and mention of the grant of the patent: **30.09.2026**
(21) Application number: 20873648.8
(22) Date of filing: 20.08.2020
(51) Int. Cl.: G01H 3/04, A61C 17/22, A61C 17/34

(54) **STATE DETECTION DEVICE, STATE DETECTION SYSTEM, AND STATE DETECTION PROGRAM**
ZUSTANDSDETIONSVORRICHTUNG, ZUSTANDSDETEKTIONSSYSTEM UND ZUSTANDSDETEKTIONSPROGRAMM
DISPOSITIF DE DÉTECTION D'ÉTAT, SYSTÈME DE DÉTECTION D'ÉTAT ET PROGRAMME DE DÉTECTION D'ÉTAT

(30) Priority: 10.10.2019 JP 2019186504
(43) Date of publication of application: 17.08.2022
(73) Proprietor: Panasonic Intellectual Property Management Co., Ltd., Osaka-shi, Osaka 540-6207 (JP)
(72) Inventor: KUWAYAMA Takeshi, Osaka-shi, Osaka 540-6207 (JP); TAKAHASHI Atsushi, Osaka-shi, Osaka 540-6207 (JP)
(74) Representative: Grünecker Patent- und Rechtsanwälte PartG mbB
(86) International application number: PCT/JP2020/031375
(87) International publication number: WO 2021/070483

(56) References cited:
- JP-A- 2013 526 379
- JP-A- 2014 520 658
- JP-A- 2019 095 551
- US-A1- 2009 241 278
- US-A1- 2011 294 096

## Description

### TECHNICAL FIELD

The present disclosure relates to a state detection device, a state detection system, and a state detection program that acoustically detect an operation state of a to-be-detected device equipped with a reciprocating drive unit.

### BACKGROUND ART

PTL 1 discloses a device for acoustically detecting a characteristic of electric oral care equipment. This device includes an acquisition unit of an average amplitude of sound, an analog-to-digital converter for the acquired sound, and a microprocessor. As a result, whether or not the electric oral care equipment is in operation, and a characteristic of the electric oral care equipment are detected.

PTL2 describes acoustic monitoring of powered oral care (POC) devices such as an electric toothbrush. A monitoring device comprises a transducer which receives sound generated by a POC device. A processor of the monitoring device analyses the sound in order to determine characteristics of the POC device based thereon. In particular, among characteristics to be determined, is a determination as to whether or not the POC device is switched on or off. The sound analysis may be based on an analysis of sound in various frequency bands as well as time windows.

### Citation List

### Patent Literature

PTL 1: Japanese Patent Publication No. 5646739
PTL2: US Patent Application Publication US 2011/294096 A1

### SUMMARY OF THE INVENTION

However, the sound generated from the electric oral care equipment is lost in the environmental sound, and it may be difficult to separate and extract the sound caused by the electric oral care equipment from the environmental sound in order to detect the operation state of the electric oral care equipment.

The present disclosure provides a state detection device, a state detection system, and a state detection program that acoustically detect an operation state of a to-be-detected device equipped with a reciprocating drive unit that is not easily affected by surrounding environmental sounds.
This is achieved by the features of the independent claims.

The state detection device, the state detection system, and the state detection program according to the present disclosure can detect the state of the to-be-detected device such as the presence or absence of the operation of the to-be-detected device regardless of an average amplitude of the environmental sound or the like.

### BRIEF DESCRIPTION OF THE DRAWINGS

Fig. 1 is a block diagram illustrating a configuration of a to-be-detected device according to a first exemplary embodiment.
Fig. 2 is a block diagram illustrating a configuration of a state detection device according to the first exemplary embodiment.
Fig. 3 is a flowchart illustrating an operation of the state detection device according to the first exemplary embodiment.
Fig. 4 is a diagram illustrating an example of a notification unit of the state detection device according to the first exemplary embodiment.
Fig. 5 is a diagram illustrating an example of the notification unit of the state detection device according to the first exemplary embodiment.
Fig. 6 is a diagram illustrating a first frequency band divided by a determination unit according to the present invention.
Fig. 7 is a flowchart illustrating an operation of a state detection device in a modification example.
Fig. 8 is a diagram illustrating an example of a detection result group including a latest detection result in the modification example.
Fig. 9 is a diagram illustrating another example of a detection result group including a latest detection result in the modification example.
Fig. 10 is a block diagram illustrating a configuration of a state detection device according to a second exemplary embodiment.
Fig. 11 is a flowchart illustrating an operation of the state detection device according to the second exemplary embodiment.
Fig. 12 is a diagram illustrating an example of a notification unit of the state detection device according to the second exemplary embodiment.
Fig. 13 is a block diagram illustrating a configuration of a to-be-detected device according to a third exemplary embodiment.
Fig. 14 is a diagram illustrating a flow of an operation when the to-be-detected device according to the third exemplary embodiment changes a drive mode.
Fig. 15A is a diagram illustrating an example of notification in the state detection device according to a fourth exemplary embodiment.
Fig. 15B is a diagram illustrating an example of notification in the state detection device according to the fourth exemplary embodiment.
Fig. 15C is a diagram illustrating an example of notification in the state detection device according to the fourth exemplary embodiment.

### DESCRIPTION OF EMBODIMENT

Hereinafter, exemplary embodiments of a state detection device and a state detection system according to the present disclosure will be described with reference to the drawings. Note that numerical values, shapes, materials, constituent elements, positional relationships and connection states between constituent elements, steps, an order of steps, and the like described in the following exemplary embodiments are merely examples, and are not intended to limit the present disclosure. Furthermore, in the following, a plurality of disclosures may be described as one exemplary embodiment, but constituent elements not recited in the claims are described as arbitrary constituent elements with respect to the disclosure according to the claims. In addition, the drawings are schematic diagrams in which emphasis, omission, and ratio adjustment are appropriately performed in order to describe the present disclosure, and may be different from actual shapes, positional relationships, and ratios.

### (First exemplary embodiment)

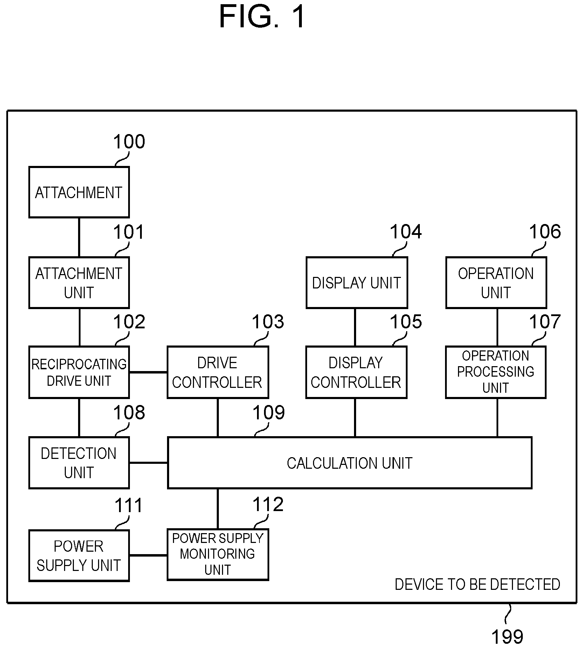

A first exemplary embodiment will be described below with reference to Figs. 1 to 6.

Fig. 1 is a block diagram illustrating a configuration of a to-be-detected device according to the first exemplary embodiment. To-be-detected device 199 includes reciprocating drive unit 102, drive controller 103, display unit 104, display controller 105, operation unit 106, operation processing unit 107, calculation unit 109, power supply unit 111, power supply monitoring unit 112, detection unit 108, attachment 100, and attachment unit 101 to which attachment 100 is attached.

Reciprocating drive unit 102 is a device capable of reciprocating a predetermined member using a linear motor, a piezoelectric element, or the like.

Drive controller 103 is a processing unit that controls reciprocating drive unit 102 to be driven at a predetermined frequency.

Attachment 100 is a member detachable from to-be-detected device 199. In the case of the present exemplary embodiment, to-be-detected device 199 is an electric toothbrush, and attachment 100 is a replaceable toothbrush. Attachment 100 is detachably attached to attachment unit 101 connected to reciprocating drive unit 102, and is vibrated in a reciprocating manner by reciprocating drive unit 102. Note that, in a state where attachment 100 is attached to attachment unit 101, reciprocating drive unit 102, attachment unit 101, and attachment 100 are integrated, and no gear or the like is interposed therebetween.

Calculation unit 109 has a plurality of drive modes for operating reciprocating drive unit 102. In the drive mode, at least one parameter of a reciprocation frequency and a reciprocation amplitude of reciprocating drive unit 102 is defined in time series.

Operation unit 106 is, for example, a switch, and when a user operates operation unit 106, operation processing unit 107 transmits a signal indicating the operation to calculation unit 109. In a case where the signal output from operation processing unit 107 is a signal for driving reciprocating drive unit 102, calculation unit 109 drives reciprocating drive unit 102 in a specific drive mode by controlling drive controller 103.

Detection unit 108 can acquire at least one of an amplitude amount and a cycle of the reciprocating motion of reciprocating drive unit 102 by monitoring an electrical characteristic of reciprocating drive unit 102. By transmitting a result detected by detection unit 108 to calculation unit 109, calculation unit 109 can know a motion state of reciprocating drive unit 102, and can feed back the control content to drive controller 103. As a result, reciprocating drive unit 102 can be stably operated at a frequency suitable for each drive mode.

Display unit 104 visually indicates information to a user. Display unit 104 is, for example, an LED, and calculation unit 109 can instruct display controller 105 to change the state of display unit 104 in order to notify the user that reciprocating drive unit 102 is driven.

Power supply unit 111 is, for example, a secondary battery, and power supply monitoring unit 112 monitors the remaining capacity of power supply unit 111 during driving of reciprocating drive unit 102, so that, for example, when the remaining capacity decreases, it is possible to notify calculation unit 109 that the remaining capacity decreases. Calculation unit 109 can automatically stop the driving of reciprocating drive unit 102 on the basis of the notification that the remaining capacity has decreased.

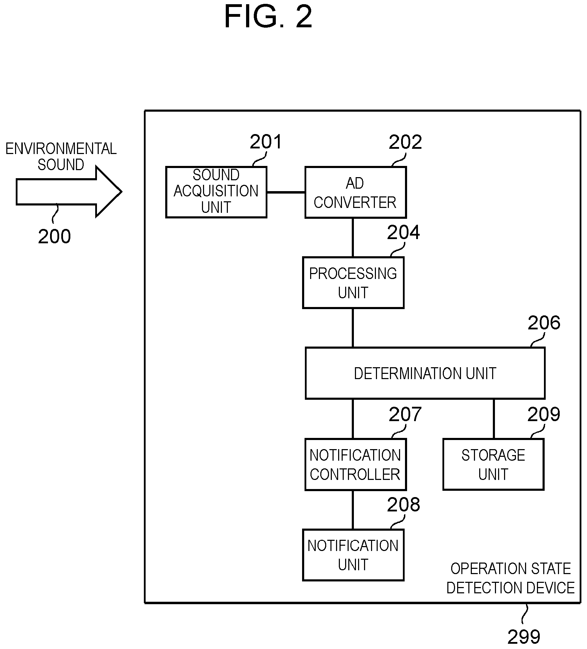

Fig. 2 is a block diagram illustrating a configuration of the state detection device according to the first exemplary embodiment. State detection device 299 is a device that detects an operation state of to-be-detected device 199 including reciprocating drive unit 102, and includes sound acquisition unit 201, AD converter 202, notification controller 207, notification unit 208, storage unit 209, processing unit 204, and determination unit 206.

State detection device 299 may be a dedicated device for detecting the operation state of to-be-detected device 199, or may be realized by installing and executing a state detection program in a general-purpose device. In the case of the present first exemplary embodiment, a case where a smartphone is adopted as a general-purpose device will be described. However, a device such as a personal computer or a wearable terminal other than a smartphone may have a similar configuration.

Sound acquisition unit 201 is a device that acquires environmental sound 200 around state detection device 299. In the present first exemplary embodiment, sound acquisition unit 201 is a microphone included in the smartphone, and converts environmental sound 200 into analog sound data.

AD converter 202 converts analog sound data of environmental sound 200 acquired by sound acquisition unit 201 into digital sound data, and transmits the digital sound data to processing unit 204.

Processing unit 204 extracts first determination data, which is data in a first frequency band including a frequency relevant to reciprocating drive unit 102, from the received digital sound data, and transmits the first determination data to determination unit 206. A method by which the processing unit extracts a specific frequency band is not particularly limited, but in the case of the present first exemplary embodiment, sound data is decomposed into frequency components by Fourier transform, and only components included in the first frequency band are extracted as first determination data. Fourier transform and extraction of a specific frequency component are realized by a module included in a state detection program installed in a smartphone. Note that processing unit 204 may implement at least one of Fourier transform and extraction of a specific frequency component with hardware. Processing unit 204 may extract the first determination data included in the first frequency band by using one or a plurality of band-pass filters.

Determination unit 206 is a processing unit that determines the presence or absence of the operation of reciprocating drive unit 102 on the basis of the first determination data extracted by processing unit 204. A method for determining the presence or absence of the operation of determination unit 206 is not particularly limited. In an example which is not claimed, determination unit 206 may compare a sound pressure of first determination data with a first threshold value stored in storage unit 209, determine that reciprocating drive unit 102 of to-be-detected device 199 is operating when the sound pressure of the first determination data is equal to or more than the first threshold value, and determine that reciprocating drive unit 102 is not operating when the sound pressure of the first determination data is less than the first threshold value. The determination result of determination unit 206 is transmitted to notification controller 207 as determination result data. In the case of the present first exemplary embodiment, these processes are realized by modules included in a state detection program installed in a smartphone.

Notification unit 208 notifies the determination result on the basis of the determination result data received from determination unit 206. The notification method of notification unit 208 is not particularly limited, and for example, the determination result may be notified to the user visually or aurally. In the case of the present first exemplary embodiment, since state detection device 299 is realized by a smartphone, notification unit 208 is at least one of a display device such as a liquid crystal display, an LED, and a speaker included in the smartphone. Notification controller 207 can update the state of notification unit 208 in order to notify the user of the received determination result.

Storage unit 209 holds the first threshold value, past determination result data, and the like. In the case of the present first exemplary embodiment, storage unit 209 is an external or internal memory included in a smartphone.

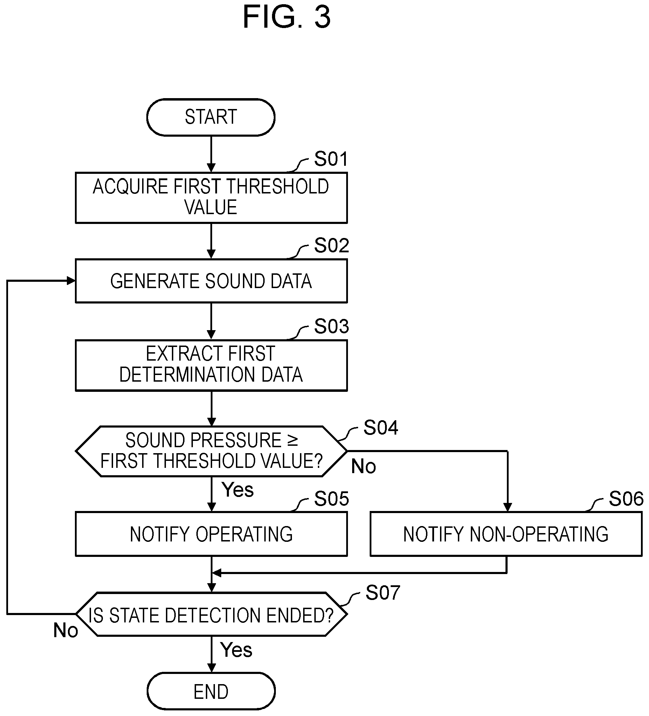

Each operation of to-be-detected device 199 and state detection device 299 configured as described above will be described below. Fig. 3 is a flowchart illustrating an operation including a process of determining the presence or absence of the operation of the to-be-detected device using the state detection device.

When the state detection program is executed by the smartphone and detection of the operation state is started, determination unit 206 of state detection device 299 acquires the first threshold value from storage unit 209 and sets the first threshold value (S01).

Next, while environmental sound 200 around state detection device 299 is acquired using sound acquisition unit 201, sampling is performed by AD converter 202 to generate digital sound data (S02).

Processing unit 204 that has acquired the generated digital sound data processes the digital sound data into spectral data for each frequency component with fast Fourier transform. Then, processing unit 204 extracts first determination data that is data in the first frequency band including a frequency relevant to reciprocating drive unit 102 (S03). In the case of the present first exemplary embodiment, reciprocating drive unit 102 of to-be-detected device 199 generates a sound in the vicinity of 270 Hz. In addition, since to-be-detected device 199 does not include a gear or the like that is rotated by the driving force of reciprocating drive unit 102 and generates a periodic noise, there is no portion that causes a sound of a specific frequency other than reciprocating drive unit 102. State detection device 299 uses such characteristics of to-be-detected device 199, and sets the first frequency band to, for example, 270 Hz ± 10 Hz.

Determination unit 206 of state detection device 299 determines whether or not the sound pressure of the first determination data processed by processing unit 204 exceeds the first threshold value acquired in step S01 (S04).

When the sound pressure in the first determination data is more than or equal to the first threshold value, determination unit 206 determines that reciprocating drive unit 102 is operating (S04: Yes), and notification unit 208 notifies that reciprocating drive unit 102 of to-be-detected device 199 is operating (S05).

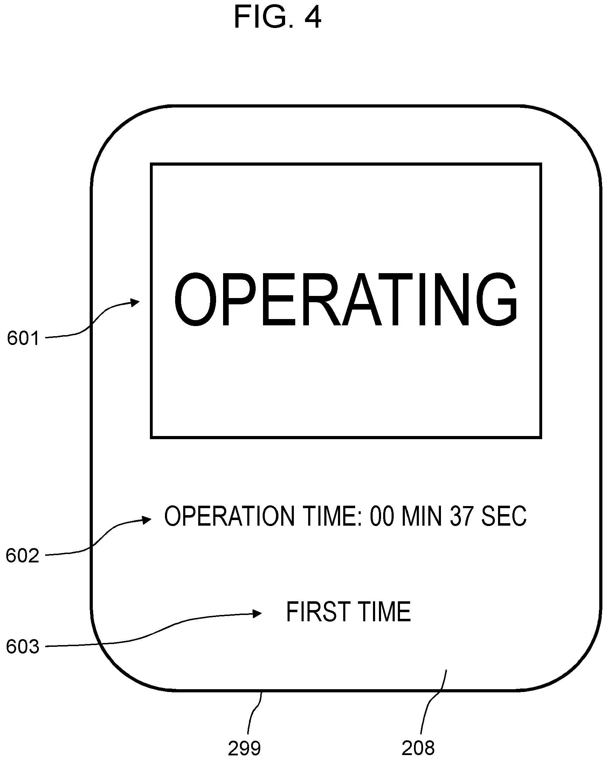

As a specific notification method, as illustrated in Fig. 4, notification unit 208 includes determination result display area 601, operation time display area 602, and operation count display area 603. While it is determined that reciprocating drive unit 102 is operating, state detection device 299 displays a notification indicating that reciprocating drive unit 102 is operating, such as "operating", in determination result display area 601, and simultaneously counts up the time displayed in operation time display area 602. When it is determined that reciprocating drive unit 102 is operating for the first time after a certain period of time has elapsed, operation count display area 603 is counted up.

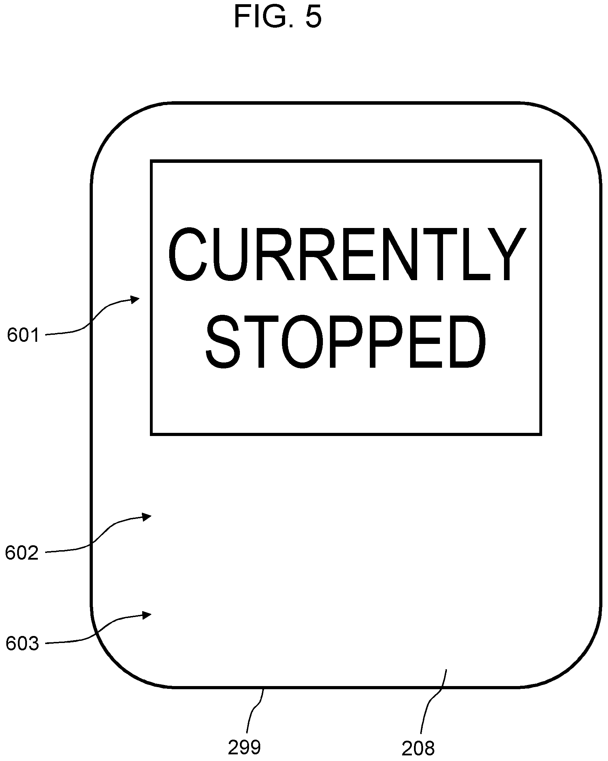

On the other hand, when the sound pressure in the first determination data is less than the first threshold value, determination unit 206 determines that reciprocating drive unit 102 is stopped (S04: No), and notification unit 208 notifies that reciprocating drive unit 102 of to-be-detected device 199 is stopped (S06). While state detection device 299 determines that reciprocating drive unit 102 is currently stopped, as illustrated in Fig. 5, state detection device displays a notification that reciprocating drive unit 102 is stopped, such as "currently stopped", in determination result display area 601. Nothing is displayed in operation time display area 602 and operation count display area 603.

Finally, it is determined whether or not to end the state detection (S07), and if not, the process returns to S02 and the process is repeated.

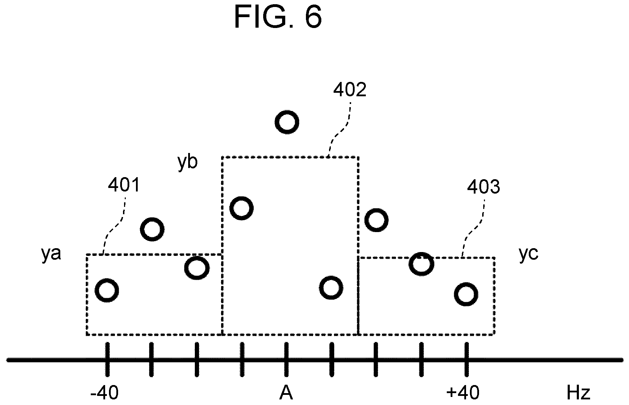

Next, a determination unit 206 for improving the determination accuracy according to the present invention will be described. Determination unit 206 divides the first determination data extracted by processing unit 204 into a plurality of sections on the basis of the frequency, and determines the presence or absence of the operation of reciprocating drive unit 102 on the basis of the relative evaluation of the sound pressure in each section. This improves determination accuracy. Fig. 6 is a diagram illustrating a spectrum of the first frequency band extracted by the processing unit in an example. Processing unit 204 extracts a first frequency band in a range of ± 40 around drive frequency A of reciprocating drive unit 102 of to-be-detected device 199. As illustrated in Fig. 6, determination unit 206 divides the first determination data extracted by processing unit 204 into second section 402 which is a section including drive frequency A, first section 401 which is a section having a frequency lower than that of second section 402, and third section 403 which is a section having a frequency higher than that of second section 402. Determination unit 206 calculates an average value of a plurality of (3 in the case of the present first exemplary embodiment) sound pressures at intervals of 10 Hz in each section. An average sound pressure in first section 401 is denoted by ya, an average sound pressure in second section 402 is denoted by yb, and an average sound pressure in third section 403 is denoted by yc.

Here, in a state in which the sound of reciprocating drive unit 102 is not included in the environmental sound, that is, in a state in which there is no superiority or inferiority among the intensities of ya, yb, and yc, the probability that the state of ya < yb > yc is established is 25%. Therefore, even when reciprocating drive unit 102 is not operating, there are 25% cases where it is determined that there is a peak in the drive frequency component in the spectrum.

Therefore, in order to improve the determination accuracy, when reciprocating drive unit 102 is not operating, determination unit 206 can stably determine that reciprocating drive unit 102 is not operating, that is, determination unit 206 uses the ya, yb, and yc values with weights so that ya ≥ yb or yb ≤ yc can be stably obtained. For example, determination unit 206 uses a coefficient α (> 1) that is a preset weight to perform weighting on the average sound pressure before determination as ya' = ya × α and yc' = yc × α. In a case where ya' ≥ yb and yb ≤ yc', the determination unit determines that reciprocating drive unit 102 is stopped, and otherwise, reciprocating drive unit 102 is in operation.

Note that, when the average sound pressures ya, yb, and yc values are determined, the average sound pressures may be determined by averaging the past average sound pressures stored in storage unit 209. As a result, the influence of a sound noise generated instantaneously is alleviated, and the detection accuracy can be improved.

Furthermore, regarding coefficients used for weighting, different coefficients α and β may be used for Ya and Yc, respectively, and weighting may be performed by addition or subtraction or a combination thereof in addition to multiplication and division.

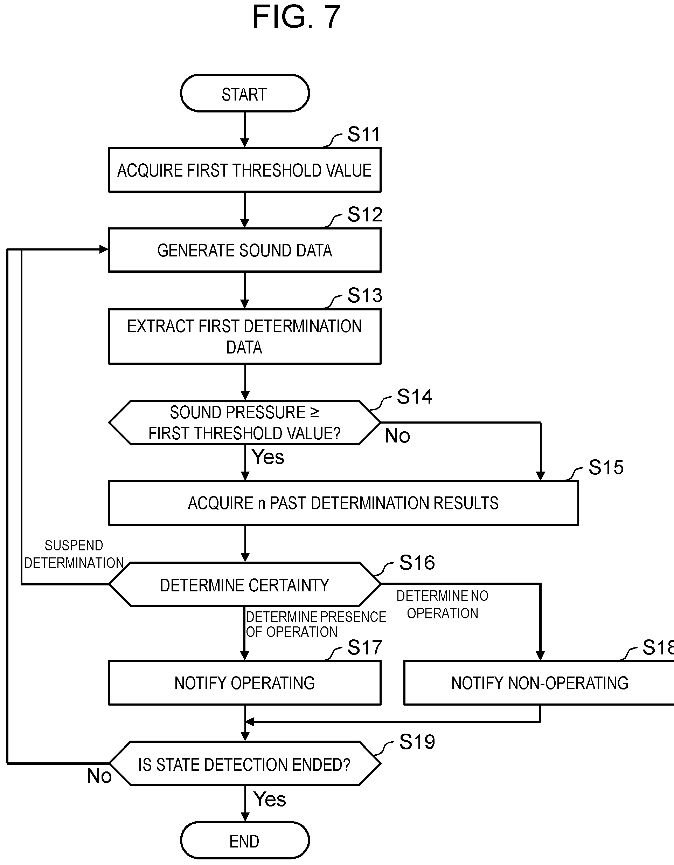

Next, a modification example of determination unit 206 for improving the determination accuracy will be described. Determination unit 206 according to the modification example determines the presence or absence of the operation of reciprocating drive unit 102 on the basis of each of a plurality of first determination data having different acquisition times, and redetermines whether the determination result of the presence or absence of the operation of reciprocating drive unit 102 is probable by combining a plurality of determination results. This improves determination accuracy. Fig. 7 is a flowchart illustrating an operation including a process of determining the presence or absence of the operation of the to-be-detected device using the state detection device in the modification example. Since this the modification example is a modification of determination unit 206, steps S11 to S14 are the same operations as steps S01 to S04.

In the modification example, after determining whether or not reciprocating drive unit 102 is operating (S14), determination unit 206 acquires n determination results determined in the past from storage unit 209 in any case of the determination results (S15). In the case of the present example, the number n of past determination results to be acquired is four.

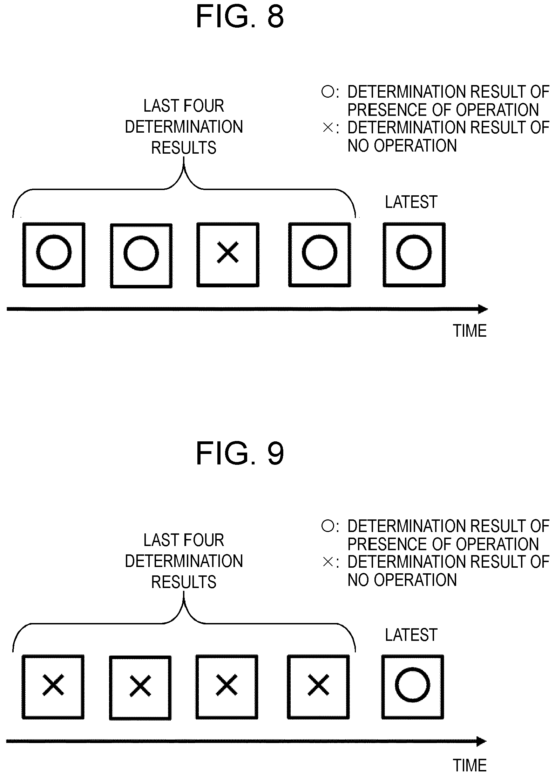

Next, determination unit 206 redetermines whether the latest determination result of the presence or absence of the operation of to-be-detected device 199 is probable from the acquired last four determination results and the latest determination result (S16). Figs. 8 and 9 are processing examples when redetermination of the probability of the latest determination result is performed from a group of a plurality of determination results.

As illustrated in Fig. 8, in a case where there are four or more determination results of presence of the operation among the five determination results including the latest determination result, determination unit 206 determines presence of the operation assuming that reciprocating drive unit 102 is likely to be operating. Then, notification unit 208 notifies that reciprocating drive unit 102 of to-be-detected device 199 is operating S17).

On the other hand, as illustrated in Fig. 9, in a case where the determination result indicating the presence of the operation is present once or less among the five determination results including the latest determination result, determination unit 206 determines that reciprocating drive unit 102 is not likely operating, and determines that there is no operation. Notification unit 208 notifies that reciprocating drive unit 102 of to-be-detected device 199 is stopped (S18).

In addition, in a case where the determination result of the presence of the operation exists in the range of two times or more and three times or less among the five determination results including the latest determination result, determination unit 206 suspends the determination of the probability. The latest determination result is held in storage unit 209, and the process returns to the generation of new sound data (S12).

Finally, it is determined whether or not to end the state detection (S19), and if not, the process returns to S12 and the process is repeated.

As described above, in the example not present in the claims state detection device 299 can determine, on the basis of the determination using the first threshold value, whether or not reciprocating drive unit 102 of to-be-detected device 199 is operating.

In the present invention, as described in Fig. 6, determination unit 206 divides the first frequency band into a part including a peak and both sides thereof, and compares the sound pressures of the respective sections with a predetermined weight. As a result, determination accuracy as to whether reciprocating drive unit 102 is operating is improved.

Further, in the modification example, state detection device 299 determines the probability of the latest determination result obtained in the first exemplary embodiment or the approach of Fig. 6 using the past determination result, and redetermines whether or not reciprocating drive unit 102 is operating. As a result, the determination accuracy can be further improved. In addition, the degree of weighting of ya, yb, and yc described in the example of Fig. 6 can be reduced, and the detection sensitivity can be improved.

### (Second exemplary embodiment)

A second exemplary embodiment will be described below. Note that components (parts) having the same effects and functions, and the same shapes, mechanisms, or structures as those of the first exemplary embodiment are denoted by the same reference marks, and description thereof may be omitted. In addition, points different from the first exemplary embodiment will be mainly described below, and the description of the same contents may be omitted.

In to-be-detected device 199, the frequency of the generated sound changes due to a difference in type, a change with time, or the like. For example, when the type of reciprocating drive unit 102, the shape of an exterior housing, the type of the replacement brush, the brushing mode, and the like are different, the frequency of the generated sound is also different. Therefore, it may not be possible to determine whether or not reciprocating drive unit 102 is operating with the preset first frequency band, first threshold value, or weighting coefficient.

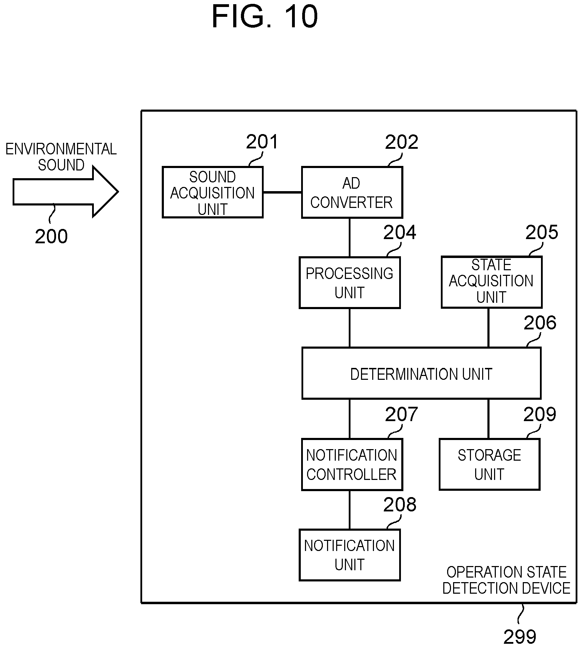

Therefore, as illustrated in Fig. 10, state detection device 299 according to the second exemplary embodiment includes state acquisition unit 205 in addition to the configuration of state detection device 299 according to the first exemplary embodiment.

State acquisition unit 205 is a processing unit that acquires an operation state of to-be-detected device 199 from a user. Also in the case of the second exemplary embodiment, a smartphone is adopted as to-be-detected device 199, and state acquisition unit 205 acquires the operation state of to-be-detected device 199 on the basis of an input from a user to a touch panel included in the smartphone.

On the basis of the operation state acquired from state acquisition unit 205 and the sound data acquired by sound acquisition unit 201, determination unit 206 updates the determination information which is used when the presence or absence of the operation of to-be-detected device 199 is determined. The determination information is, for example, a first frequency band, a first threshold value, a weighting coefficient, or the like.

Specifically, for example, determination unit 206 may compare the sound data in a state where reciprocating drive unit 102 is not operating with the sound data in a state where the reciprocating drive unit is operating, and update the data to the first frequency band optimal for the determination.

In addition, coefficients for performing weighting on ya, yb, and yc may be updated such that a probability that the average sound pressure stably becomes ya < yb > yc when reciprocating drive unit 102 of to-be-detected device 199 is not operated becomes less than or equal to a certain constant.

In addition, in a case where the number n of past determination results used for determining the probability that reciprocating drive unit 102 is operating or not is fixed, the number of times "M1" of the determination results of presence of operation necessary for determining that determination that reciprocating drive unit 102 is operating is probable among n times may be updated. Similarly, the number of times "M2" of the determination result as to whether or not there is an operation necessary for making a determination that reciprocating drive unit 102 is not operating in n times probable may be updated.

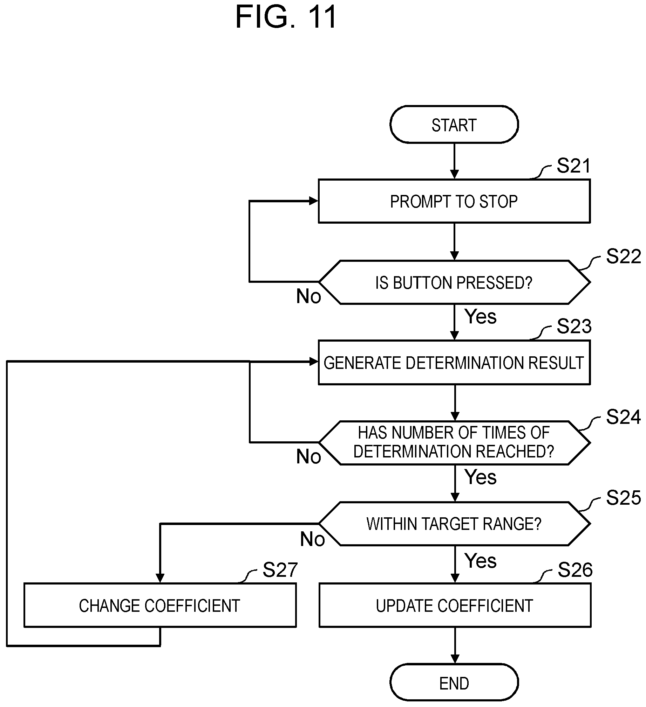

Specifically, an operation for updating weight coefficient α will be described as an example. Fig. 11 is a flowchart illustrating an operation for updating weighting coefficient α.

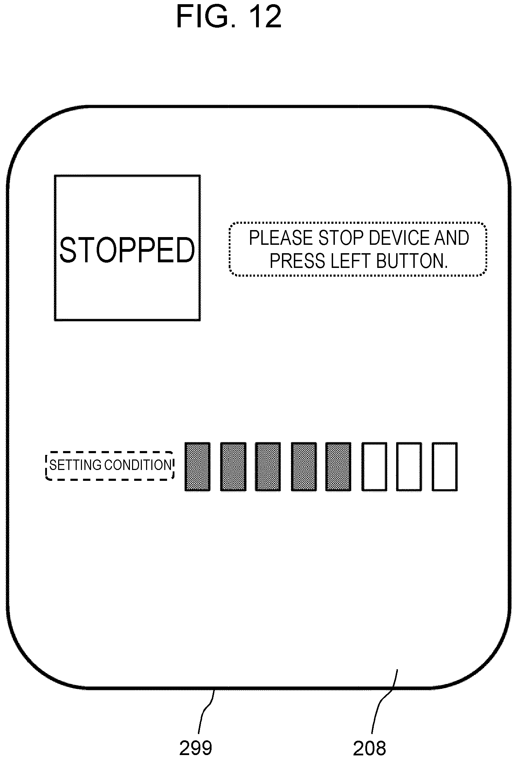

First, when the process of updating the weighting coefficient is started, as illustrated in Fig. 12, notification unit 208 of state detection device 299 displays contents prompting the user to stop the operation of to-be-detected device 199 (S21). Next, state detection device 299 monitors the state of state acquisition unit 205 and determines whether or not the user has stopped the operation of reciprocating drive unit 102 (S22). Specifically, after stopping reciprocating drive unit 102 of to-be-detected device 199, the user touches a "stopped" button formed by the GUI, so that to-be-detected device 199 generates digital sound data using sound acquisition unit 201.

When it is determined that the user stopped the operation of to-be-detected device 199 (S22: Yes), state detection device 299 performs the determination processing described in the first exemplary embodiment, and determination unit 206 generates a determination result (S23). The generation of the determination result is performed a plurality of times.

Next, it is determined whether the number of times of determination has reached a certain value or more (S24), and if the number of times has reached (S24: Yes), determination unit 206 calculates the probability of determining that reciprocating drive unit 102 is operating and determines whether or not it is within the target range (S25).

If the determination probability of the determination result indicating that reciprocating drive unit 102 is operating is within a target range, it is determined that the adjustment has been completed, and determination unit 206 updates the same value as the previous coefficient (S26), and ends the process. On the other hand, if it is out of the target range, determination unit 206 changes weighting coefficient α and returns to the determination result generation (S23) again.

As described above, in the present second exemplary embodiment, state detection device 299 can update the determination information to a value suitable for the environment, the model of to-be-detected device 199, and the like. As a result, for example, even in an environment where another device having the same frequency component as that of to-be-detected device 199 is operating in a washroom, optimal determination information can be reconfigured from the environmental sound in a case where to-be-detected device 199 is not operating. Therefore, the operation of to-be-detected device 199 is detected with high accuracy.

### (Third exemplary embodiment)

A third exemplary embodiment of a state detection system will be described. Note that components (parts) having the same effects and functions, and the same shapes, mechanisms, or structures as those of the first and second exemplary embodiments are denoted by the same reference marks, and description thereof may be omitted. In addition, points different from the first and second exemplary embodiments will be mainly described below, and description of the same contents may be omitted.

In the third exemplary embodiment, to-be-detected device 199 can change the drive frequency of reciprocating drive unit 102 according to the state of to-be-detected device 199. State detection device 299 can detect a plurality of drive frequencies and acquire a state other than whether or not to-be-detected device 199 is in operation.

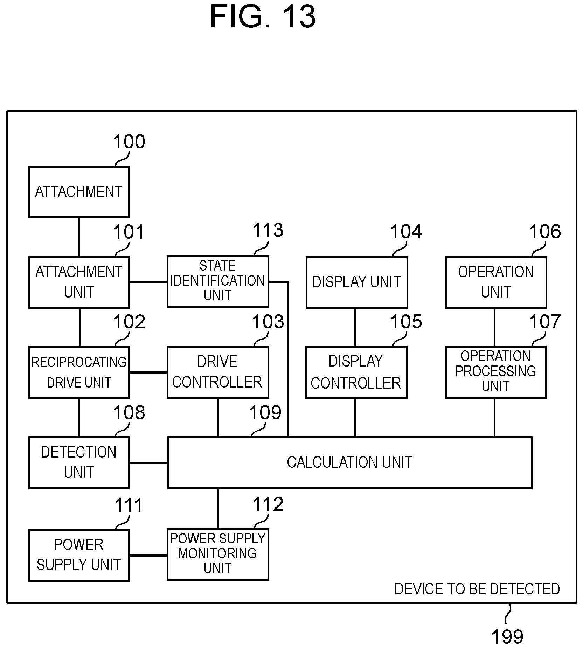

Fig. 13 is a block diagram illustrating a configuration of to-be-detected device 199 according to the third exemplary embodiment. To-be-detected device 199 according to the third exemplary embodiment includes state identification unit 113 that identifies the state of to-be-detected device 199 in addition to the first exemplary embodiment.

State identification unit 113 identifies the state of to-be-detected device 199, for example, the type of the attached attachment, the use state of to-be-detected device 199 by the user, a remaining amount of a battery which is power supply unit 111 of to-be-detected device 199, and the like. In the case of the present third exemplary embodiment, state identification unit 113 identifies the use state of to-be-detected device 199 by the user by detecting the external stress applied to attachment unit 101. Specifically, state identification unit 113 is a pressure sensor, a strain sensor, a Hall IC, or the like, and converts an external stress to attachment 100 into an electric signal via a structural change of attachment unit 101. As a result, it is possible to specify a state in which the user strongly presses attachment 100. The signal from state identification unit 113 is transmitted to calculation unit 109, and the use state is grasped by calculation unit 109.

To-be-detected device 199 includes a plurality of drive modes in which reciprocating drive unit 102 operates at different frequencies. Specifically, to-be-detected device 199 normally operates in a first drive mode, and in a case where the state of to-be-detected device 199 is determined as a predetermined state on the basis of the information from state identification unit 113, calculation unit 109 gives an instruction to drive controller 103 to enter a second drive mode in which reciprocating drive unit 102 operates at a second frequency different from a normal first frequency.

State detection device 299 according to the third exemplary embodiment has the same configuration as state detection device 299 according to the first or second exemplary embodiment. Processing unit 204 of state detection device 299 can also extract second determination data, which is data in a second frequency band different from the first frequency band, from the acquired sound data. The second frequency band includes sound of the second frequency generated from reciprocating drive unit 102 by the second drive mode of to-be-detected device 199.

Determination unit 206 determines the state of to-be-detected device 199 on the basis of the first determination data and the second determination data extracted by processing unit 204.

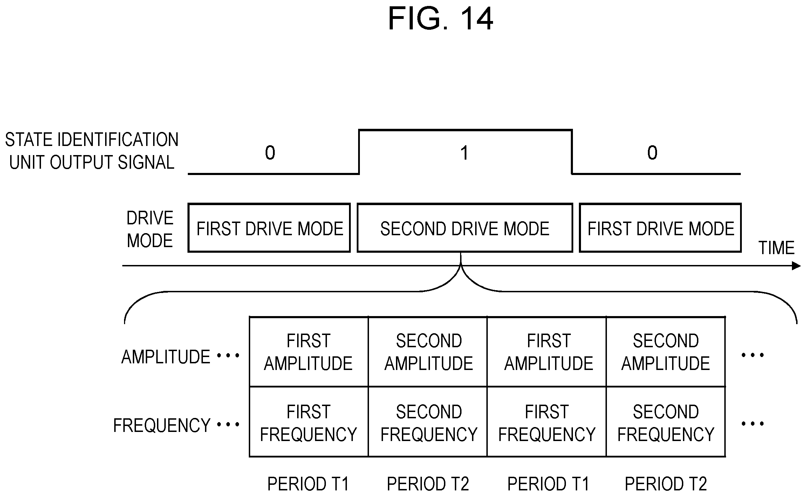

Fig. 14 illustrates an example of a temporal change of an output signal of the state identification unit in the to-be-detected device and the drive mode managed by the calculation unit to which the output signal is input in the present third exemplary embodiment. In the present example, the output signal of state identification unit 113 is 0 or 1, 0 indicates that the stress from attachment 100 is within a normal range, and 1 indicates that the stress from attachment 100 is abnormal.

When the signal from state identification unit 113 is 0, the stress to attachment 100 is normal, so that the drive mode is the first drive mode. When the signal from state identification unit 113 is 1, calculation unit 109 instructs drive controller 103 to operate in the second drive mode for the purpose of notifying the user that the pressing force by the user is abnormal. The second drive mode is configured by, for example, repetition of period T1 driven with a normal amplitude and a normal frequency, and period T2 driven with a second amplitude and a second frequency.

Processing unit 204 of state detection device 299 extracts the first determination data in the first frequency band including the first frequency and the second determination data in the second frequency band including the second frequency from the sound data obtained from sound acquisition unit 201.

Determination unit 206 uses the first determination data and the second determination data to determine whether or not the sound generated from reciprocating drive unit 102 is included by the determination method of the first or second exemplary embodiment. By storing the determination result over time, it can be detected that a state in which the sound of the first frequency continues for period T1 and a state in which the sound of the second frequency continues for period T2 alternately occur.

As described above, in the present exemplary embodiment, to-be-detected device 199 can change the drive mode on the basis of the output signal of state identification unit 113 that detects the stress applied to attachment 100. In addition, state detection device 299 can notify the user of the state of the pressing force using notification unit 208 by detecting the change in the drive frequency characterized by the change in the driving mode.

As a result, for example, when to-be-detected device 199 is an electric toothbrush, state detection device 299 can notify the user that the user strongly presses the replaceable toothbrush, which is attachment 100.

Further, to-be-detected device 199 may hold a plurality of combination patterns such as a first amplitude value, a second amplitude value, period T1, and period T2, and change the combination pattern according to the output value from state identification unit 113. This makes it possible to notify state detection device 299 of a plurality of states of to-be-detected device 199.

Furthermore, in the present third exemplary embodiment, calculation unit 109 of to-be-detected device 199 may change the drive mode using a signal from power supply monitoring unit 112 and information from detection unit 108 in addition to the signal from state identification unit 113. As a result, it is possible to notify the user whether or not the battery capacity of to-be-detected device 199 is lowered.

### (Fourth exemplary embodiment)

Next, a fourth exemplary embodiment will be described. Noted that components (parts) having the same effects and functions, and the same shapes, mechanisms, or structures as those of the first, second, and third exemplary embodiments are denoted by the same reference marks, and description thereof may be omitted. In addition, points different from the first, second, and third exemplary embodiments will be mainly described below, and description of the same contents may be omitted.

In the fourth exemplary embodiment, notification unit 208 of state detection device 299 can display, in determination result display area 601, useful information useful for the user using the to-be-detected device 199 as a plurality of images in addition to the state display of the to-be-detected device 199 such as "operating" or "currently stopped". Here, the useful information is, for example, information regarding an appropriate method of use for enhancing the user's skill in using a toothbrush, and includes any one or more of a position of to-be-detected device 199 with respect to the user's teeth, an orientation of to-be-detected device 199 with respect to the user's teeth, a relative movement direction of to-be-detected device 199 with respect to the user's teeth, a pressing force when the user presses to-be-detected device 199 against the teeth, a use time of to-be-detected device 199, and a setting state of to-be-detected device 199. Specifically, the useful information includes an image of how the brush is applied to the tooth, a numerical value or a bar graph indicating a pressing force, a number indicating a polishing time for each site, a type of the brush, a drive mode, or the like.

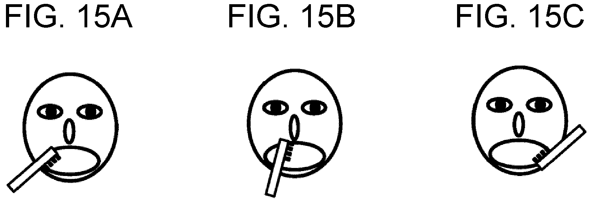

A part illustrated in Fig. 15A, a part illustrated in Fig. 15B, and a part illustrated in Fig. 15C are examples of the useful information displayed in determination result display area 601 in the fourth exemplary embodiment. A part illustrated in Fig. 15A is an image showing an appropriate manner of brushing a right back tooth, a part illustrated in Fig. 15B is an image showing an appropriate manner of brushing a front tooth, and a part illustrated in Fig. 15C is an image showing an appropriate manner of brushing a left back tooth. Here, a description will be given below assuming that the above images form a moving image of a correct way of brushing teeth, and the user is informed.

While state detection device 299 determines that reciprocating drive unit 102 is operating, it is expected that the user is brushing his or her teeth. Therefore, state detection device 299 changes the images displayed in determination result display area 601 in the order of Figs. 15A, 15B, and 15C to teach the user how to correctly brush his or her teeth.

On the other hand, since it is expected that the user is not brushing his or her teeth while state detection device 299 determines that reciprocating drive unit 102 is stopped, the change of the image displayed in determination result display area 601 is stopped.

As described above, in the present exemplary embodiment, to-be-detected device 199 can display the useful information other than the state display of to-be-detected device 199 in conjunction with the operation state of to-be-detected device 199 via determination result display area 601. As a result, it is possible to notify the user who is using to-be-detected device 199 of the useful information having a higher illuminating effect.

Furthermore, in the present fourth exemplary embodiment, notification unit 208 of state detection device 299 may notify useful information useful for the user using to-be-detected device 199 by a method combining information that stimulates five senses, for example, sound, vibration, stimulation to the skin, odor, taste in addition to the images, and may change these in conjunction with the operation state of to-be-detected device 199.

Note that the present disclosure is not limited to the above exemplary embodiments. For example, another exemplary embodiment realized by arbitrarily combining the components described in the present specification or excluding some of the components may be an exemplary embodiment of the present disclosure. Further, the present disclosure also includes modifications obtained by making various modifications to the above exemplary embodiments that can be conceived by those skilled in the art without departing from the spirit of the present disclosure, that is, the meaning indicated by the words described in the claims.

Note that the first frequency band extracted by processing unit 204 is not limited to one frequency band, and may be the first frequency band including a frequency band including a high-order overtone and the like.

Furthermore, to-be-detected device 199 is not limited to the electric toothbrush, and may be an electric shaver, an electric hair clipper, or the like.

Further, although processing unit 204 uses the Fourier transform to extract the first frequency band, the processing unit may extract the first frequency band or the like using a single or a plurality of band-pass filters.

In addition, processing unit 204, determination unit 206, and the like have been described as programs that cause a computer to function, but may be realized by an analog circuit or a digital circuit. Furthermore, drive controller 103, calculation unit 109, processing unit 204, and determination unit 206 may include an arithmetic processing device. The arithmetic processing device includes, for example, at least one of a central processing unit (CPU) and a micro processing unit (MPU).

The present disclosure is applicable to detection of an operation state of a device equipped with the reciprocating drive unit. Specifically, the present disclosure is applicable to detection of an operation state of a product including a reciprocating drive unit, such as an electric toothbrush, an electric shaver, an electric hair clipper, a hairdressing device, or a beauty device.

### REFERENCE MARKS IN THE DRAWINGS

- 100: attachment
- 101: attachment unit
- 102: reciprocating drive unit
- 103: drive controller
- 104: display unit
- 105: display controller
- 106: operation unit
- 107: operation processing unit
- 108: detection unit
- 109: calculation unit
- 111: power supply unit
- 112: power supply monitoring unit
- 113: state identification unit
- 199: to-be-detected device
- 200: environmental sound
- 201: sound acquisition unit
- 202: converter
- 204: processing unit
- 205: state acquisition unit
- 206: determination unit
- 207: notification controller
- 208: notification unit
- 209: storage unit
- 299: state detection device
- 401: first section
- 402: second section
- 403: third section
- 601: determination result display area
- 602: operation time display area
- 603: operation count display area

## Claims

1. A state detection device configured to detect an operation state of a to-be-detected device (199) comprising a reciprocating drive unit (102) and not including a gear to generate a periodic noise, the state detection device comprising:
a sound acquisition unit (201) configured to acquire a surrounding environmental sound (200) as sound data;
a processing unit (204) configured to extract first determination data from the sound data which has been acquired, the first determination data being sound data comprising a sound pressure in a first frequency band including a drive frequency (A) of the reciprocating drive unit (102);
a determination unit (206) configured to determine presence or absence of an operation of the reciprocating drive unit (102) on the basis of the first determination data which has been extracted; and
a notification unit (208) configured to notify a determination result by the determination unit (206),
**characterized in that**
the determination unit (206) is configured to divide the first determination data into a second section (402) which is a section including the drive frequency (A), a first section (401) which is a section having a frequency lower than that of the second section, and a third section (403) which is a section having a frequency higher than that of the second section,
to calculate an average sound pressure in the first section and apply a weight thereon,
to calculate an average sound pressure in the third section and apply a weight thereon,
to calculate an average sound pressure in the second section, and
to determine that the reciprocating drive (102) is stopped in a case where the average sound pressure in the second section is equal to or lower than the weighted average sound pressure in the first section and the weighted average sound pressure in the third section, and otherwise, that the reciprocating drive unit (102) is in operation.

2. The state detection device according to claim 1, wherein
the processing unit (204) is configured to extract a plurality of first determination data, each of the plurality of the first determination data having different acquisition times, and
the determination unit (206) is configured to determine the presence or absence of the operation of the reciprocating drive unit (102) on the basis of each of the plurality of the first determination data, thereby producing a determination result for each of the plurality of the first determination data, and to redetermine whether the determination result of the presence or absence of the operation of the reciprocating drive unit (102) is probable on the basis of the plurality of the determination results.

3. The state detection device according to claim 1 or 2, wherein
the state detection device further comprises a state acquisition unit (205) configured to acquire the operation state of the to-be-detected device (199) from a user,
a determination information is defined in the determination unit (206), the determination unit being configured to use the determination information to determine the presence or absence of an operation of the to-be-detected device (199), and
the determination unit (206) is configured to update the determination information,
wherein the update of the determination information is performed on the basis of the operation state acquired from the state acquisition unit (205) and the sound data acquired by the sound acquisition unit (201).

4. The state detection device according to any one of claims 1 to 3, wherein
the to-be-detected device (199) comprises a plurality of drive modes in which the reciprocating drive unit operates at different frequencies,
the processing unit (204) is configured to extract, from the sound data second determination data which has been acquired, that is data of a second frequency band different from the first frequency band, and
the determination unit (206) is configured to determine a state of the to-be-detected device (199) on the basis of the first determination data and the second determination data both of which have been extracted.

5. The state detection device according to any one of claims 1 to 4, wherein the notification unit (208) is configured to notify useful information useful for a user who uses the to-be-detected device (199).

6. The state detection device according to claim 5, wherein the notification unit is configured to change a notification state of the useful information according to the detected operation state of the to-be-detected device.

7. The state detection device according to claim 6 or 7, wherein the useful information includes a use time of the to-be-detected device.

8. A state detection system comprising:
a to-be-detected device (199) comprising a reciprocating drive unit (102); and
a state detection device (299) according to any of claims 1 to 7, configured to detect an operation state of the to-be-detected device (199),
wherein
the to-be-detected device (199) comprises a drive controller (103) configured to operate the reciprocating drive unit (102) in a plurality of drive modes,
the processing unit (204) is configured to extract a plurality of determination data from the sound data which has been acquired, the plurality of determination data being data in a plurality of frequency bands including respective frequencies corresponding to the plurality of drive modes; and
the determination unit (206) is configured to determine the operation state of the reciprocating drive unit (102) on the basis of the plurality of determination data which have been extracted.

9. A computer program configured to detect an operation state of a to-be-detected device (199) comprising a reciprocating drive unit (102) and not including a gear to generate a periodic noise, the computer program comprising instructions which, when the program is executed by a computer, cause the computer to function as:
a processing unit (204) configured to acquire a surrounding environmental sound (200) as sound data from a sound acquisition unit (201), and extract first determination data from the sound data, the first determination data being sound data comprising a sound pressure in a first frequency band including a drive frequency of the reciprocating drive unit (102); and
a determination unit (206) configured to determine presence or absence of an operation of the reciprocating drive unit (102) on the basis of the extracted first determination data,
**characterized in that**
the determination unit (206) is configured to divide the first determination data into a second section (402) which is a section including the drive frequency (A), a first section (401) which is a section having a frequency lower than that of the second section, and a third section (403) which is a section having a frequency higher than that of the second section,
to calculate an average sound pressure in the first section and apply a weight thereon,
to calculate an average sound pressure in the third section and apply a weight thereon,
to calculate an average sound pressure in the second section, and
to determine that the reciprocating drive (102) is stopped in a case where the average sound pressure in the second section is equal to or lower than the weighted average sound pressure in the first section and the weighted average sound pressure in the third section, and otherwise, that the reciprocating drive unit (102) is in operation.

## Patentansprüche

1. Zustands-Erkennungsvorrichtung, die so konfiguriert ist, dass sie einen Funktionszustand einer zu erkennenden Vorrichtung (199) erkennt, die eine Hub-Antriebseinheit (102) umfasst und kein Zahnrad aufweist, das ein periodisches Geräusch erzeugt, wobei die Zustands-Erkennungsvorrichtung umfasst:
eine Schall-Erfassungseinheit (201), die so konfiguriert ist, dass sie eine umgebende Geräuschkulisse (200) als Schalldaten erfasst;
eine Verarbeitungseinheit (204), die so konfiguriert ist, dass sie erste Feststellungsdaten aus den Schalldaten extrahiert, die erfasst worden sind, wobei die ersten Feststellungsdaten Schalldaten sind, die einen Schalldruck in einem ersten Frequenzband umfassen, das eine Antriebsfrequenz (A) der Hub-Antriebseinheit (102) einschließt;
eine Feststellungseinheit (206), die so konfiguriert ist, dass sie Vorhandensein oder Nichtvorhandensein einer Funktion der Hub-Antriebseinheit (102) auf Basis der ersten Feststellungsdaten feststellt, die extrahiert worden sind; und
eine Mitteilungseinheit (208), die so konfiguriert ist, dass sie ein Feststellungsergebnis durch die Feststellungseinheit (206) feststellt,
**dadurch gekennzeichnet, dass**
die Feststellungseinheit (206) so konfiguriert ist, dass sie die ersten Feststellungsdaten in einen zweiten Teilabschnitt (402), der ein Teilabschnitt ist, der die Antriebsfrequenz (A) einschließt, einen ersten Teilabschnitt (401), der ein Teilabschnitt mit einer niedrigeren Frequenz als der des zweiten Teilabschnitts ist, sowie einen dritten Teilabschnitt (403) unterteilt, der ein Teilabschnitt mit einer höheren Frequenz als der des zweiten Teilabschnitts ist,
dass sie einen durchschnittlichen Schalldruck in dem ersten Teilabschnitt berechnet und diesem ein Gewicht verleiht,
dass sie einen durchschnittlichen Schalldruck in dem dritten Teilabschnitt berechnet und diesem ein Gewicht verleiht,
dass sie einen durchschnittlichen Schalldruck in dem zweiten Teilabschnitt berechnet, und
dass sie in einem Fall, in dem der durchschnittliche Schalldruck in dem zweiten Teilabschnitt genauso stark ist wie oder schwächer als der gewichtete durchschnittliche Schalldruck in dem ersten Teilabschnitt und der gewichtete durchschnittliche Schalldruck in dem dritten Teilabschnitt, feststellt, dass die der Hubantrieb (102) im Stillstand ist, und ansonsten feststellt, dass die Hub-Antriebseinheit (102) in Funktion ist.

2. Zustands-Erkennungsvorrichtung nach Anspruch 1, wobei
die Verarbeitungseinheit (204) so konfiguriert ist, dass sie eine Vielzahl erster Feststellungsdaten extrahiert, wobei alle der Vielzahl der ersten Feststellungsdaten unterschiedliche Erfassungszeiten haben, und
die Feststellungseinheit (206) so konfiguriert ist, dass sie das Vorhandensein oder Nichtvorhandensein der Funktion der Hub-Antriebseinheit (102) auf Basis aller der Vielzahl der ersten Feststellungsdaten feststellt und so ein Feststellungsergebnis für alle der Vielzahl der ersten Feststellungsdaten erzeugt und auf Basis der Vielzahl der Feststellungsergebnisse erneut feststellt, ob das Feststellungsergebnis hinsichtlich des Vorhandenseins oder Nichtvorhandenseins der Funktion der Hub-Antriebseinheit (102) wahrscheinlich ist.

3. Zustands-Erkennungsvorrichtung nach Anspruch 1 oder 2, wobei
die Zustands-Erkennungsvorrichtung des Weiteren eine Zustands-Erfassungseinheit (205) umfasst, die so konfiguriert ist, dass sie den Funktionszustand der zu erkennenden Vorrichtung (199) von einem Benutzer erfasst,
eine Feststellungsinformation in der Feststellungseinheit (206) definiert ist, wobei die Feststellungseinheit so konfiguriert ist, dass sie die Feststellungsinformation verwendet, um das Vorhandensein oder Nichtvorhandensein einer Funktion der zu erkennenden Vorrichtung (199) festzustellen, und
die Feststellungseinheit (206) so konfiguriert ist, dass sie die Feststellungsinformation aktualisiert,
wobei die Aktualisierung der Feststellungsinformation auf Basis des von der Zustands-Erfassungseinheit (205) erfassten Funktionszustandes sowie der durch die Schall-Erfassungseinheit (201) erfassten Schalldaten durchgeführt wird.

4. Zustands-Erkennungsvorrichtung nach einem der Ansprüche 1 bis 3, wobei
die zu erkennende Vorrichtung (199) eine Vielzahl von Antriebsmodi umfasst, in denen die Hub-Antriebseinheit bei verschiedenen Frequenzen arbeitet,
die Verarbeitungseinheit (204) so konfiguriert ist, dass sie aus den Schalldaten zweite Feststellungsdaten extrahiert, die erfasst worden sind und die Daten eines zweiten Frequenzbandes sind, das sich von dem ersten Frequenzband unterscheidet, und
die Feststellungseinheit (206) so konfiguriert ist, dass sie einen Zustand der zu erkennenden Vorrichtung (199) auf Basis der ersten Feststellungsdaten sowie der zweiten Feststellungsdaten feststellt, die beide extrahiert worden sind.

5. Zustands-Erkennungsvorrichtung nach einem der Ansprüche 1 bis 4, wobei die Mitteilungseinheit (208) so konfiguriert ist, dass sie nützliche Informationen mitteilt, die für einen Benutzer nützlich sind, der die zu erkennende Vorrichtung (199) nutzt.

6. Zustands-Erkennungsvorrichtung nach Anspruch 5, wobei die Mitteilungseinheit so konfiguriert ist, dass sie einen Mitteilungszustand der nützlichen Informationen entsprechend dem erkannten Funktionszustand der zu erkennenden Vorrichtung ändert.

7. Zustands-Erkennungsvorrichtung nach Anspruch 6 oder 7, wobei die nützlichen Informationen eine Nutzungszeit der zu erkennenden Vorrichtung einschließen.

8. Zustands-Erkennungssystem, das umfasst:
eine zu erkennende Vorrichtung (199), die eine Hub-Antriebseinheit (102) umfasst; sowie eine Zustands-Erkennungsvorrichtung (299) nach einem der Ansprüche 1 bis 7, die so konfiguriert ist, dass sie einen Funktionszustand einer zu erfassenden Vorrichtung (199) erkennt,
wobei
die zu erkennende Vorrichtung (199) eine Antriebssteuerung (103) umfasst, die so konfiguriert ist, dass sie die Hub-Antriebseinheit (102) in einer Vielzahl von Antriebsmodi betreibt,
die Verarbeitungseinheit (204) so konfiguriert ist, dass sie eine Vielzahl von Feststellungsdaten aus den Schalldaten extrahiert, die erfasst worden sind, wobei die Vielzahl von Feststellungsdaten Daten in einer Vielzahl von Frequenzbändern sind, die jeweilige Frequenzen einschließen, die der Vielzahl von Antriebsmodi entsprechen; und
die Feststellungseinheit (206) so konfiguriert ist, dass sie den Funktionszustand der Hub-Antriebseinheit (102) auf Basis der Vielzahl von Feststellungsdaten feststellt, die extrahiert worden sind.

9. Computerprogramm, das zum Erkennen eines Funktionszustandes einer zu erkennenden Vorrichtung (199) konfiguriert ist, die eine Hub-Antriebseinheit (102) umfasst und kein Zahnrad aufweist, das ein periodisches Geräusch erzeugt, wobei das Computerprogramm Befehle umfasst, die, wenn das Programm von einem Computer ausgeführt wird, den Computer veranlassen, zu arbeiten als:
eine Verarbeitungseinheit (204), die so konfiguriert ist, dass sie eine umgebende Geräuschkulisse (200) als Schalldaten von einer Schall-Erfassungseinheit (201) erfasst und erste Feststellungsdaten aus den Schalldaten extrahiert, wobei die ersten Feststellungsdaten Schalldaten sind, die einen Schalldruck in einem ersten Frequenzband umfassen, das eine Antriebsfrequenz der Hub-Antriebseinheit (102) einschließt; sowie
eine Feststellungseinheit (206), die so konfiguriert ist, dass sie Vorhandensein oder Nichtvorhandensein einer Funktion der Hub-Antriebseinheit (102) auf Basis der extrahierten ersten Feststellungsdaten feststellt,
**dadurch gekennzeichnet, dass**
die Feststellungseinheit (206) so konfiguriert ist, dass sie die ersten Feststellungsdaten in einen zweiten Teilabschnitt (402), der ein Teilabschnitt ist, der die Antriebsfrequenz (A) einschließt, einen ersten Teilabschnitt (401), der ein Teilabschnitt mit einer niedrigeren Frequenz als der des zweiten Teilabschnitts ist, sowie einen dritten Teilabschnitt (403) unterteilt, der ein Teilabschnitt mit einer höheren Frequenz als der des zweiten Teilabschnitts ist,
dass sie einen durchschnittlichen Schalldruck in dem ersten Teilabschnitt berechnet und diesem ein Gewicht verleiht,
dass sie einen durchschnittlichen Schalldruck in dem dritten Teilabschnitt berechnet und diesem ein Gewicht verleiht,
dass sie einen durchschnittlichen Schalldruck in dem zweiten Teilabschnitt berechnet, und
dass sie in einem Fall, in dem der durchschnittliche Schalldruck in dem zweiten Teilabschnitt genauso stark ist wie oder schwächer als der gewichtete durchschnittliche Schalldruck in dem ersten Teilabschnitt und der gewichtete durchschnittliche Schalldruck in dem dritten Teilabschnitt, feststellt, dass die Hub-Einheit (102) im Stillstand ist, und ansonsten feststellt, dass die Hub-Antriebseinheit (102) in Funktion ist.

## Revendications

1. Dispositif de détection d'état configuré pour détecter un état de fonctionnement d'un dispositif à détecter (199) comprenant une unité d'entraînement à mouvement alternatif (102) et ne comprenant pas d'engrenage pour générer un bruit périodique, le dispositif de détection d'état comprenant:
une unité d'acquisition sonore (201) configurée pour acquérir un son ambiant (200) sous forme de données sonores;
une unité de traitement (204) configurée pour extraire des premières données de détermination à partir des données sonores qui ont été acquises, les premières données de détermination étant des données sonores comprenant une pression acoustique dans une première bande de fréquences incluant une fréquence d'entraînement (A) de l'unité d'entraînement à mouvement alternatif (102);
une unité de détermination (206) configurée pour déterminer la présence ou l'absence d'un fonctionnement de l'unité d'entraînement à mouvement alternatif (102) sur la base des premières données de détermination qui ont été extraites; et
une unité de notification (208) configurée pour notifier un résultat de détermination par l'unité de détermination (206),
**caractérisé en ce que**
l'unité de détermination (206) est configurée pour
diviser les premières données de détermination en une deuxième section (402) qui est une section comprenant la fréquence d'entraînement (A), une première section (401) qui est une section ayant une fréquence inférieure à celle de la deuxième section, et une troisième section (403) qui est une section dont la fréquence est supérieure à celle de la deuxième section,
calculer une pression acoustique moyenne dans la première section et lui appliquer un poids,
calculer une pression acoustique moyenne dans la troisième section et lui appliquer un coefficient de pondération,
calculer une pression acoustique moyenne dans la deuxième section, et
déterminer que l'entraînement alternatif (102) est arrêté au cas où la pression acoustique moyenne dans la deuxième section est égale ou inférieure à la pression acoustique moyenne pondérée dans la première section et à la pression acoustique moyenne pondérée dans la troisième section, et dans le cas contraire, que l'unité d'entraînement alternatif (102) est en service.

2. Dispositif de détection d'état selon la revendication 1, dans lequel
l'unité de traitement (204) est configurée pour extraire une pluralité de premières données de détermination, chacune des premières données de détermination de la pluralité ayant des instants d'acquisition différents, et
l'unité de détermination (206) est configurée pour déterminer la présence ou l'absence de fonctionnement de l'unité d'entraînement à mouvement alternatif (102) sur la base de chacune des premières données de détermination, produisant ainsi un résultat de détermination pour chacune des premières données de détermination, et à redéterminer si le résultat de détermination de la présence ou de l'absence du fonctionnement de l'unité d'entraînement à mouvement alternatif (102) est probable sur la base de la pluralité de résultats de détermination.

3. Dispositif de détection d'état selon les revendications 1 ou 2, dans lequel
le dispositif de détection d'état comprend en outre une unité d'acquisition d'état (205) configurée pour acquérir l'état de fonctionnement du dispositif à détecter (199) auprès d'un utilisateur,
des informations de détermination sont définies dans l'unité de détermination (206), l'unité de détermination étant configurée pour utiliser les informations de détermination afin de déterminer la présence ou l'absence d'un fonctionnement du dispositif à détecter (199), et
l'unité de détermination (206) est configurée pour mettre à jour les informations de détermination,
dans lequel la mise à jour des informations de détermination est effectuée sur la base de l'état de fonctionnement acquis par l'unité d'acquisition d'état (205) et des données sonores acquises par l'unité d'acquisition sonore (201).

4. Dispositif de détection d'état selon l'une quelconque des revendications 1 à 3, dans lequel
le dispositif à détecter (199) comprend une pluralité de modes d'entraînement dans lesquels l'unité d'entraînement à mouvement alternatif fonctionne à différentes fréquences,
l'unité de traitement (204) est configurée pour extraire, à partir des données sonores acquises, des deuxièmes données de détermination, c'est-à-dire des données d'une deuxième bande de fréquences différente de la première bande de fréquences, et
l'unité de détermination (206) est configurée pour déterminer un état du dispositif à détecter (199) sur la base des premières données de détermination et des secondes données de détermination qui ont toutes deux été extraites.

5. Dispositif de détection d'état selon l'une quelconque des revendications 1 à 4, dans lequel l'unité de notification (208) est configurée pour notifier des informations utiles à un utilisateur qui utilise le dispositif à détecter (199).

6. Dispositif de détection d'état selon la revendication 5, dans lequel l'unité de notification est configurée pour modifier un état de notification des informations utiles en fonction de l'état de fonctionnement détecté du dispositif à détecter.

7. Dispositif de détection d'état selon les revendications 6 ou 7, dans lequel les informations utiles comprennent une durée d'utilisation du dispositif à détecter.

8. Système de détection d'état comprenant:
un dispositif à détecter (199) comprenant une unité d'entraînement à mouvement alternatif (102); et
un dispositif de détection d'état (299) selon l'une quelconque des revendications 1 à 7, configuré pour détecter un état de fonctionnement du dispositif à détecter (199),
dans lequel
le dispositif à détecter (199) comprend un contrôleur d'entraînement (103) configuré pour faire fonctionner l'unité d'entraînement à mouvement alternatif (102) selon une pluralité de modes d'entraînement,
l'unité de traitement (204) est configurée pour extraire une pluralité de données de détermination à partir des données sonores qui ont été acquises, la pluralité de données de détermination étant des données dans une pluralité de bandes de fréquences comprenant des fréquences respectives correspondant à la pluralité de modes d'entraînement; et
l'unité de détermination (206) est configurée pour déterminer l'état de fonctionnement d' l'unité d'entraînement à mouvement alternatif (102) sur la base de la pluralité de données de détermination qui ont été extraites.

9. Programme informatique configuré pour détecter un état de fonctionnement d'un dispositif à détecter (199) comprenant une unité d'entraînement en va-et-vient (102) et ne comprenant pas d'engrenage pour générer un bruit périodique, le programme informatique comprenant des instructions qui, lorsque le programme est exécuté par un ordinateur, amènent l'ordinateur à fonctionner comme :
une unité de traitement (204) configurée pour acquérir un son ambiant (200) sous forme de données sonores à partir d'une unité d'acquisition sonore (201), et pour extraire des premières données de détermination à partir des données sonores, les premières données de détermination étant des données sonores comprenant une pression acoustique dans une première bande de fréquences incluant une fréquence d'entraînement de l'unité d'entraînement à mouvement alternatif (102); et
une unité de détermination (206) configurée pour déterminer la présence ou l'absence d'un fonctionnement de l'unité d'entraînement à mouvement alternatif (102) sur la base des premières données de détermination extraites,
**caractérisé en ce que**
l'unité de détermination (206) est configurée pour diviser les premières données de détermination en une deuxième section (402) qui est une section comprenant la fréquence d'entraînement (A), une première section (401) qui est une section ayant une fréquence inférieure à celle de la deuxième section, et une troisième section (403) qui est une section dont la fréquence est supérieure à celle de la deuxième section,
calculer une pression acoustique moyenne dans la première section et lui appliquer un poids,
calculer une pression acoustique moyenne dans la troisième section et lui appliquer un coefficient de pondération,
calculer une pression acoustique moyenne dans la deuxième section, et
déterminer que l'entraînement alternatif (102) est arrêté au cas où la pression acoustique moyenne dans la deuxième section est égale ou inférieure à la pression acoustique moyenne pondérée dans la première section et à la pression acoustique moyenne pondérée dans la troisième section, et dans le cas contraire, que l'unité d'entraînement alternatif (102) est en service.
